# EUROPEAN PATENT SPECIFICATION

(11) **EP 3 637 916 B1**
(45) Date of publication and mention of the grant of the patent: **11.05.2022**
(21) Application number: 18819701.6
(22) Date of filing: 22.06.2018
(51) Int. Cl.: H04L 1/16, H04L 1/18, H04L 5/00

(54) **DATA TRANSMISSION METHOD, DATA TRANSMISSION FEEDBACK METHOD, AND RELATED DEVICE**
DATENÜBERTRAGUNGSVERFAHREN, DATENÜBERTRAGUNGSRÜCKKOPPLUNGSVERFAHREN UND ZUGEHÖRIGE VORRICHTUNG
PROCÉDÉ DE TRANSMISSION DE DONNÉES, PROCÉDÉ DE RETOUR DE TRANSMISSION DE DONNÉES, ET DISPOSITIF ASSOCIÉ

(30) Priority: 24.06.2017 CN 201710489650
(43) Date of publication of application: 15.04.2020
(73) Proprietor: Huawei Technologies Co., Ltd., Longgang District Shenzhen, Guangdong 518129 (CN)
(72) Inventor: WU, Yiqun, Shenzhen Guangdong 518129 (CN); XU, Xiuqiang, Shenzhen Guangdong 518129 (CN); WANG, Lei, Shenzhen Guangdong 518129 (CN); CHEN, Yan, Shenzhen Guangdong 518129 (CN)
(74) Representative: Pfenning, Meinig & Partner mbB
(86) International application number: PCT/CN2018/092502
(87) International publication number: WO 2018/233705

(56) References cited:
- CN-A- 103 179 672
- CN-A- 103 918 211
- CN-A- 104 704 758
- US-A1- 2013 114 570
- US-A1- 2013 195 047
- LENOVO ET AL: "Design of uplink HARQ-ACK feedback for efeMTC", 3GPP DRAFT; R1-1707774, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Hangzhou; 20170515 - 20170519 14 May 2017 (2017-05-14), XP051272977, Retrieved from the Internet: URL:http://www.3gpp.org/ftp/Meetings_3GPP_ SYNC/RAN1/Docs/ [retrieved on 2017-05-14]
- QUALCOMM INCORPORATED: "Uplink HARQ-ACK Feedback", 3GPP TSG-RAN WG1 Meeting #89 R1-1708797, 6 May 2017 (2017-05-06), XP051262672,

## Description

### TECHNICAL FIELD

The present invention relates to the communications field, and in particular, to a data transmission method, a data transmission feedback method, and a related device.

### BACKGROUND

In an LTE (long term evolution, long term evolution, LTE for short) communications system, uplink data is transmitted by using a GB (grant based, grant based) transmission mechanism. A base station adds feedback information to a PHICH (physical hybrid ARQ indicator channel, physical hybrid automatic repeat request channel) to indicate whether the base station correctly receives the uplink data. The feedback information includes ACK (acknowledgement, acknowledgment, ACK for short) feedback information and NACK (negative acknowledgement, negative acknowledgment, NACK for short) feedback information. ACK represents that the base station successfully receives and demodulates the uplink data, and NACK represents that the base station does not successfully receive the uplink data. On the PHICH, feedback information of different uplink data is multiplexed in a code division multiple access manner.

In a 5G communications system, the industry is considering a technology in which the base station sends feedback information of a plurality of UEs (user equipment, user equipment) by using a bitmap. In the prior art, the feedback information of the plurality of UEs is sent by using the bitmap, each UE determines, based on an index of a pilot sequence and an index of a time-frequency resource block that are of the UE, a location of feedback information of the UE in the bitmap, and the UE determines, based on the feedback information, whether retransmission needs to be performed. A problem in this solution is that each UE needs to know related information, such as a global quantity of UE pilot sequences and a quantity of time-frequency resource blocks, to calculate the location of the feedback information in the bitmap. Therefore, the base station needs to send additional signaling to notify each UE of the global quantity of pilot sequences and the global quantity of time-frequency resource blocks. Consequently, signaling overheads and a transmission latency are increased.

In US 2013/0195047 A1 methods for devices, devices and computer program products for devices relate to a communication module, arranged for packet based communication, and including a receiving module. The receiving module is arranged to receive a control message, wherein the control message includes a plurality of acknowledgement information items, wherein each of the plurality of acknowledgement information items are located in a preset portion of the control message, respectively. The device further includes a determination module, arranged to determine whether the received control message is intended for the device, a selection module, arranged to select, responsive to an affirmative determination result, at least one of the plurality of acknowledgement information items based on the preset portions, and an obtaining module, arranged to obtain control data contained in the selected at least one of the plurality of acknowledgement information items.

US 2013/114570 A1 relates to a method for a terminal to transmit uplink (UL) data in a wireless access system, comprising the following steps: receiving uplink resource allocation information for uplink data transmission from a base station via a downlink control channel, wherein the uplink resource allocation information includes resource block allocation information for each slot of a subframe and modulation and coding scheme (MCS) information; receiving, from the base station, sequence information allocated to each terminal so as to transmit uplink data through a code division multiplexing (CDM) scheme in cooperation with other terminals in a resource block pair region of the subframe; and transmitting uplink data to the base station through the resource block pair region in accordance with the received sequence information.

### SUMMARY

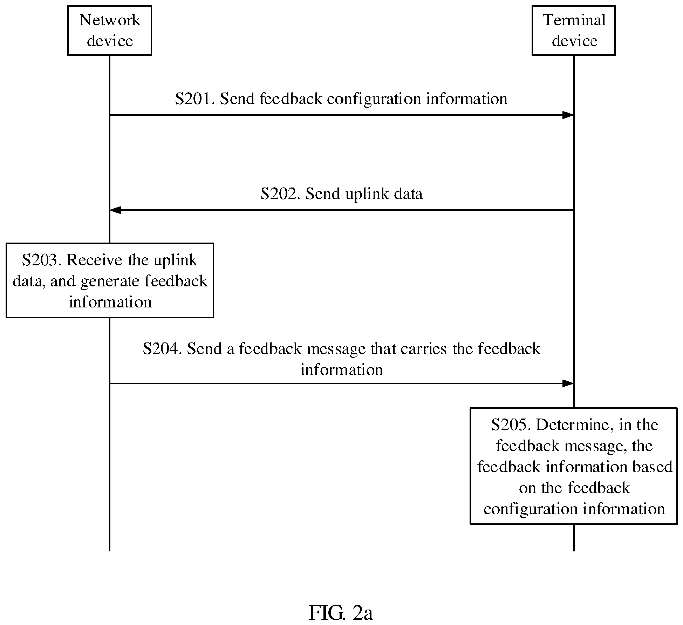

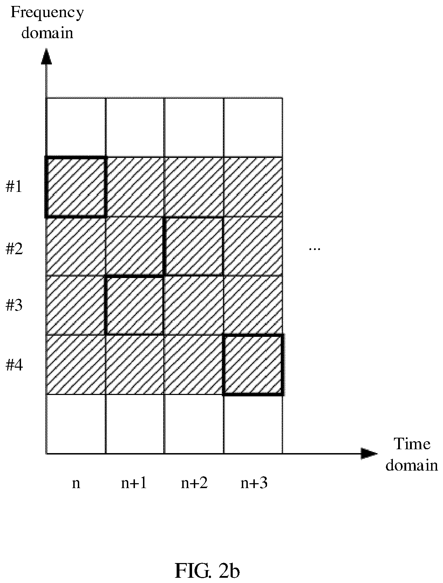

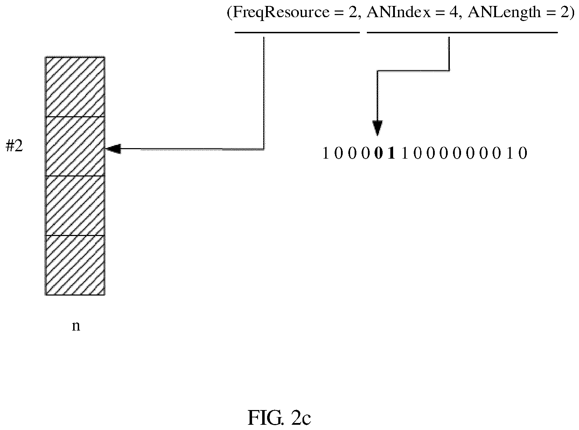

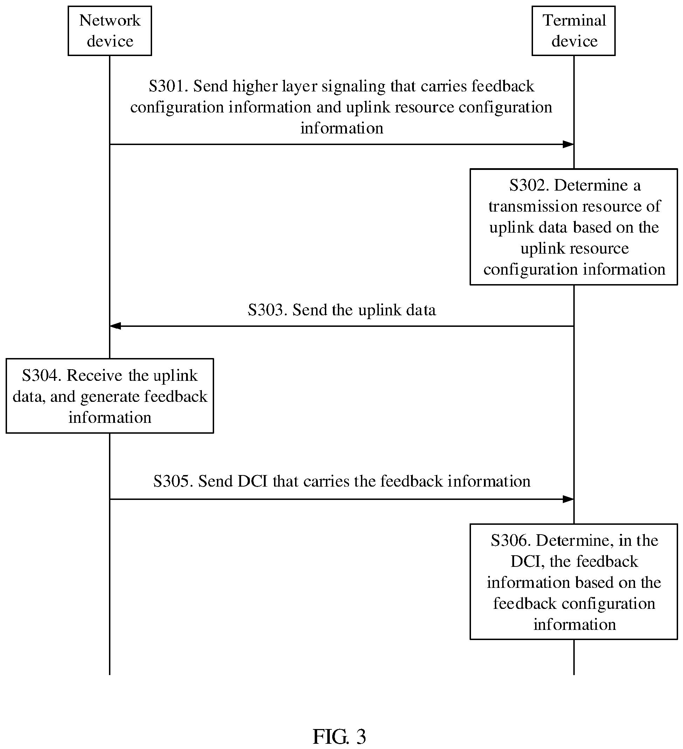

The invention is defined in independent claims 1, 5, 8, 9 and 10. A technical problem resolved by the invention in the independent claims is to reduce signaling overheads and a transmission latency of data transmission. The embodiments in Fig. 2a, 2b, 2c and 3 and the related passages in this specification are not according to the invention and are present for illustrative purposes only.

### BRIEF DESCRIPTION OF DRAWINGS

To describe the technical solutions in the embodiments of the present invention or in the background more clearly, the following briefly describes the accompanying drawings required for describing the embodiments of the present invention or the background.
FIG. 1 shows a network architectural of a communications system according to an embodiment of the present invention;
FIG. 2a is a schematic interaction diagram of a data transmission method
FIG. 2b is a schematic diagram of allocating an uplink time-frequency resource
FIG. 2c is a schematic structural diagram of a feedback message
FIG. 3 is another schematic interaction diagram of a data transmission method according to an embodiment of the present invention;
FIG. 4 is another schematic interaction diagram of a data transmission method according to an embodiment of the present invention;
FIG. 5 is another schematic interaction diagram of a data transmission method according to an embodiment of the present invention;
FIG. 6 is another schematic interaction diagram of a data transmission method according to an embodiment of the present invention;
FIG. 7 is a schematic structural diagram of a data transmission apparatus according to an embodiment of the present invention;
FIG. 8 is another schematic structural diagram of a data transmission apparatus according to an embodiment of the present invention;
FIG. 9 is a schematic structural diagram of a data transmission feedback apparatus according to an embodiment of the present invention; and
FIG. 10 is another schematic structural diagram of a data transmission feedback apparatus according to an embodiment of the present invention.

### DESCRIPTION OF EMBODIMENTS

The following describes the embodiments of the present invention with reference to the accompanying drawings in the embodiments of the present invention.

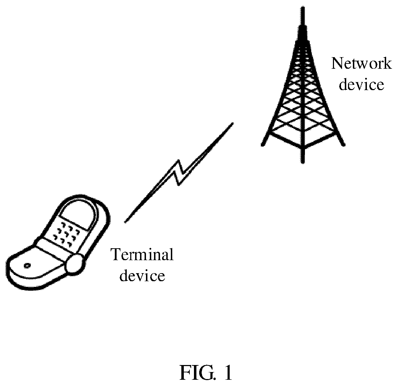

FIG. 1 is a schematic diagram of an architecture of a communications system according to an embodiment of the present invention. The communications system includes a network device and a terminal device. FIG. 1 shows one network device communicating with one terminal device. The communications system may be a global system for mobile communication (global system for mobile communication, GSM), a code division multiple access (code division multiple access, CDMA) system, and a wideband code division multiple access (wideband code division multiple access, WCDMA) system, a worldwide interoperability for microwave access (worldwide interoperability for microwave access, WiMAX) system, a long term evolution (long term evolution, LTE) system, a 5G communications system (for example, a new radio (new radio, NR) system, a communications system that integrates a plurality of communications technologies (for example, a communications system that integrates an LTE technology and an NR technology), or a subsequent evolved communications system. Forms and quantities of the network device and the terminal device shown in FIG. 1 are merely used as an example, and do not constitute a limitation on the embodiments of the present invention.

A terminal device in this application is a device having a wireless communication function, and may be a handheld device having a wireless communication function, a vehicle-mounted device, a wearable device, a computing device, another processing device connected to a wireless modem, or the like. The terminal device may have different names in different networks, for example, a terminal device, an access terminal, a subscriber unit, a subscriber station, a mobile station, a mobile console, a remote station, a remote terminal, a mobile device, a user terminal, a terminal, a wireless communications device, a user agent, a user apparatus, a cellular phone, a cordless phone, a session initiation protocol (Session Initiation Protocol, SIP) phone, a wireless local loop (wireless Local Loop, WLL) station, a personal digital assistant (personal digital assistant, PDA), or a terminal device in a 5G network or a future evolved network.

The network device in this application is a device that is deployed in a radio access network to provide a wireless communication function, and includes but is not limited to a base station (for example, a BTS (base transceiver station, BTS), a NodeB (NodeB, NB), an evolved NodeB (evolved nodeB, eNB or eNodeB), a transmission node or a transmission reception point (transmission reception point, TRP or TP) or a next-generation NodeB (generation nodeB, gNB) in an NR system, or a base station in a future communications network, a relay node, an access point, a vehicle-mounted device, a wearable device, a wireless fidelity (wireless-fidelity, Wi-Fi) station, a wireless backhaul node, a small cell, a micro base station, or the like.

A current feedback information sending method is as follows: The network device determines a target bit in a bitmap and determines a value of the target bit, the network device sends the bitmap to the terminal dcvicc, and the terminal device determines a location of feedback information in the bitmap based on an index of a pilot sequence. It can be learned that in a current feedback method, the network device needs to notify each terminal device of global pilot sequence configuration information and global resource block configuration information, so that the terminal device determines, based on the global pilot sequence configuration information and the global resource block configuration information, the location of the feedback information in the bitmap sent by the network device. The bitmap may be included in downlink control information (Downlink Control Information, DCI) sent by the network device.

The embodiments of the present invention provide a data transmission method. The terminal device learns, based on feedback configuration information sent by the network device, a configuration of feedback information. When needing to send uplink data to the network device, the terminal device can directly obtain, based on the feedback configuration information, the feedback information from a feedback message sent by the network device specific to the uplink data, and determine, based on the feedback information, whether retransmission needs to be performed. In this way, the terminal device simultaneously obtains, in a explicit manner, the feedback information from a specified location in the feedback message sent by the network device, and does not need to obtain the location of the feedback information based on a global quantity of pilot sequences and global resource information that are allocated by the network device. Therefore, signaling overheads and a latency of data transmission are reduced.

FIG. 2a shows a data transmission method. The method includes but is not limited to the following steps.

S201. A network device sends feedback configuration information to a terminal device, and the terminal device receives the feedback configuration information sent by the network device.

The feedback configuration information is used to indicate a configuration of feedback information specific to uplink data of the terminal device, and the terminal device determines, based on the feedback configuration information, the feedback information sent to the terminal device in a feedback message (for example, DCI) sent by the network device. The feedback message includes feedback information sent to a plurality of different terminal devices. The feedback information indicates a status of receiving, by the network device, the uplink data sent by the terminal device. The feedback information may indicate three receiving statuses: successful demodulation of the uplink data, failed demodulation of the uplink data, and a failure in receiving the uplink data.

Optionally, the network device sends, to the terminal device, higher layer signaling that carries the feedback configuration information, and the terminal device may obtain the feedback configuration information from the higher layer signaling sent by the network device. The higher layer signaling is signaling above a physical layer, and the higher layer signaling includes but is not limited to an RRC message and a MAC message. For example, the RRC message includes any one of a radio resource control connection reconfiguration (RRC Connection Reconfiguration) message, a radio resource control connection reestablishment (RRC Connection Reestablishment) message, a radio resource control connection establishment (RRC Connection Setup) message, and an RRC connection resume message.

Optionally, the network device sends, to the terminal device, DCI that carries the feedback configuration information, and the terminal device obtains the feedback configuration information from the DCI.

Optionally, the feedback configuration information includes a plurality of parameters. The network device sends, to the terminal device, higher layer signaling that carries first feedback configuration information, and sends, to the terminal device, DCI that carries second feedback configuration information. The terminal device obtains the first feedback configuration information from the higher layer signaling, and obtains the second feedback configuration information from the DCI. The terminal device obtains the feedback configuration information based on the first feedback configuration information and the second feedback configuration information, and the first feedback configuration information and the second feedback configuration information jointly indicate the configuration of the feedback information specific to the uplink data of the terminal device. The first feedback configuration information includes some parameters in the feedback configuration information, and the second feedback configuration information includes the other parameters in the feedback configuration information.

S202. The terminal device sends the uplink data to the network device, and the network device receives the uplink data sent by the terminal device.

The terminal device needs to send the uplink data to the network device by using a transmission resource. The transmission resource used to send the uplink data is allocated by the network device. The terminal device may send the uplink data to the network device by using a GB transmission mechanism (or referred to as a GB transmission mode), or may send the uplink data to the network device by using a grant-free (grant-free, GF) transmission mechanism (or referred to as a GF transmission mode). When a plurality of terminal devices communicate with the network device, some terminal devices may send uplink data to the network device by using the GB transmission mechanism, and the other terminal devices may send uplink data to the network device by using the GF transmission mechanism. In the GB transmission mechanism, before transmitting the uplink data, the terminal device needs to send an uplink scheduling request to the network device, the network device sends an uplink grant (UL grant) to the terminal device based on the scheduling request sent by the terminal device, so as to instruct to allocate, to the terminal device, the transmission resource used to transmit the uplink data, and only after receiving the uplink grant, the terminal device transmits the uplink data by using the transmission resource indicated by the uplink grant. In the GF transmission mechanism, before transmitting the uplink data, the terminal device does not need to send the scheduling request to the network device, but transmits the uplink data to the network device by using a transmission resource pre-allocated by the network device. In the GB transmission mechanism, the terminal device can transmit the uplink data without an uplink grant from the network device. In this embodiment of the present invention, uplink data transmitted by using the GB transmission mechanism is referred to as GB data, and uplink data transmitted by using the GF transmission mechanism is referred to as GF data. The network device receives the uplink data sent by the terminal device, where the uplink data may be GB (grant based, grant based, GB for short) data, or may be GF data. It should be noted that when the uplink data sent by the terminal device to the network device includes both the GB data and the GF data, the network device separately generates different feedback information based on the GB data and the GF data. Feedback information to the GB data and feedback information to the GF data are at different locations in the feedback message generated by the network device.

When the uplink data is the GB data, before sending the uplink data, the terminal device needs to send the uplink scheduling request to the network device. The uplink scheduling request is used to request, from the network device, the transmission resource for transmitting the uplink data. The network device determines, based on parameters such as a data volume, a service type, and a priority of the uplink data, whether to allocate the transmission resource to the terminal device. If the network device determines to allocate the transmission resource to the terminal device, the network device sends the uplink grant to the terminal device, and the terminal device sends the uplink data to the network device after receiving the uplink grant.

When the uplink data is the GF data, the terminal device does not need to obtain a grant of the network device specific to this uplink data transmission, and directly uses the transmission resource that is preconfigured by the network device for the terminal device and that is used to send the uplink data. When prcconfiguring, for the terminal device, the transmission resource used to transmit the uplink data, the network device may send uplink resource configuration information. The uplink resource configuration information indicates the transmission resource that is allocated to the terminal device to transmit the uplink data. The terminal device sends the uplink data based on the transmission resource indicated by the uplink resource configuration information. The transmission resource includes but is not limited to one or more of a time-frequency resource, a reference signal, a spread spectrum sequence, a scrambling code, and a codebook. The network device may allocate one time-frequency resource block (resource block, RB) to the terminal device in each TTI (transmission time interval, TTI), or allocate a plurality of time-frequency resource blocks to the terminal device in each TTI, or allocate one time-frequency resource block to the terminal device in a plurality of TTIs, in other words, periodically allocate one time-frequency resource block to the terminal device. This is not limited in this embodiment. The network device allocates time-frequency resource blocks on different subcarriers to the terminal device, to implement frequency hopping and obtain a frequency diversity gain. In this way, transmission reliability is improved.

For example, referring to FIG. 2b, a shadow grid in FIG. 2b represents a time-frequency resource that can be allocated to the terminal device, a horizontal coordinate represents time domain, and numbers n, n+1, n+2, and n+3 each represent sequence numbers of subframes (TTIs or slots). A vertical coordinate represents frequency domain, and #1, #2, #3, and #4 represent sequence numbers of subbands. A bandwidth of a subband is not limited in this embodiment, and is also set according to a requirement. For example, the bandwidth of the subband is bandwidth of 12 subcarriers. In a communications system, a TTI is one subframe. The network device allocates one time-frequency resource block to the terminal device in each subframe. To be specific, the network device allocates, to the terminal device in a subframe n, a time-frequency resource block corresponding to a subband #1, allocates, to the terminal device in a subframe n+1, a time-frequency resource block corresponding to a subband #3, allocates, to the terminal device in a subframe n+2, a time-frequency resource block corresponding to subband #2, and allocates, to the terminal device in a subframe n+3, a time-frequency resource block corresponding to subband #4. The network device allocates a time-frequency resource block of a different frequency band to the terminal device in each TTI, to implement a frequency diversity gain. In this way, data transmission reliability is improved.

In a possible implementation, the network device may allocate a same time-frequency resource block to a plurality of different terminal devices, and then distinguish the different terminal devices by using different reference signals (reference signal, RS). The transmission resource of the terminal device includes a time-frequency resource and a reference signal, and the network device needs to number the reference signals that are of the different terminal devices and that are in the time-frequency resource block.

A possible numbering method is: defining a number of the transmission resource, and determining a number of the time-frequency resource block and a number of the reference signal by using the number of the transmission resource. For example, each TTI is corresponding to K time-frequency resource blocks, and each time-frequency resource block includes L different reference signals. In this case, there are K x L transmission resources in each TTI, and a range of numbers of the transmission resources is 1 to K x L.

Another possible numbering method is: separately defining a number of the time-frequency resource block and a number of the reference signal, and determining a number of an uplink resource based on the two numbers. For example, each TTI is corresponding to K time-frequency resource blocks, and each time-frequency resource block includes L different reference signals. In this case, a number of a transmission resource is (i, j), 1 ≤ i ≤ K, 1 ≤ j≤ L, and i and j are integers.

Optionally, the network device may further configure a physical layer parameter for the terminal device. The physical layer parameter includes but is not limited to one or more of a modulation and coding mode, a redundancy version, a reference signal sequence parameter (for example, a root of a ZC (Zadoff-Chu) sequence), or a cyclic shift parameter of a reference signal sequence.

S203. The network device receives the uplink data, and generates the feedback information.

When the network device receives the uplink data sent by the terminal device, three cases may occur. 1. The network device does not detect the uplink data sent by the terminal device, in other words, the network device does not receive the uplink data. 2. The network device detects the uplink data sent by the terminal device (in other words, the network device receives the uplink data sent by the terminal device), but the network device fails to demodulate the received uplink data. 3. The network device detects the uplink data sent by the terminal device (in other words, the network device receives the uplink data sent by the terminal device), and the network device successfully demodulates the received uplink data. For the foregoing three receiving cases, the network device may generate the feedback information to indicate, to the terminal device, a status of receiving, by the network device, the uplink data transmitted by the terminal device. The feedback information may indicate three statuses: successful demodulation of the uplink data, failed demodulation of the uplink data, and a failure in receiving the uplink data. The successful demodulation of the uplink data represents that the network device receives the uplink data sent by the terminal device and successfully demodulates the uplink data; the failed demodulation of the uplink data represents that the network device receives the uplink data sent by the terminal device but fails to demodulate the uplink data; and the failure in receiving the uplink data represents that the network device does not detect the uplink data sent by the terminal device.

In a possible implementation, the network device may use one bit to represent the feedback information. For example, when the bit of the feedback information is "1", it represents that the network device successfully demodulates the uplink data; or when the bit of the feedback information is "0", it represents that the network device fails to demodulate the uplink data or does not receive the uplink data.

In another possible implementation, the network device may use two bits to represent the feedback information. For example, when the bits of the feedback information are "00", it indicates that the network device does not receive the uplink data; "01" indicates that the network device receives the uplink data but fails to demodulate the uplink data; and "11" indicates that the network device receives the uplink data and successfully demodulates the uplink data.

It should be noted that a correspondence between a bit value and a meaning represented by the feedback information is not limited to the foregoing example, and may be set according to a requirement. This is not limited in this embodiment.

S204. The network device sends, to the terminal device, the feedback message that carries the feedback information, and the terminal device receives the feedback message sent by the network device.

The feedback message may be DCI, and the DCI includes a field used to perform feedback on uplink data transmission. In an embodiment, the feedback message is common DCI. The common DCI is DCI specific to a plurality of terminal devices (or a group of terminal devices), and one piece of common DCI includes information specific to the plurality of terminal devices (or the group of terminal devices). The common DCI may be used to perform feedback on uplink data transmission performed by using a plurality of hybrid automatic repeat request (Hybrid Automatic Repeat reQuest, HARQ) processes of a same terminal device, or perform feedback on uplink data transmission of a plurality of terminal devices. In this embodiment of the present invention, the common DCI includes feedback information specific to uplink data transmission of the plurality of terminal devices, the plurality of terminal devices include the terminal device that sends the uplink data in S203, and the feedback information sent to the plurality of terminal devices is at different locations in the feedback message.

In an embodiment, when a terminal device simultaneously sends a plurality of pieces of uplink data by using a plurality of HARQ processes, the network device may perform feedback on uplink data sent by using each HARQ process of the terminal device. Feedback information specific to uplink data transmission of the terminal device includes feedback information specific to the uplink data sent by using each HARQ process of the terminal device. Feedback information corresponding to different HARQ processes of the terminal device is at different locations in the feedback message. In another embodiment, the network device may alternatively perform feedback, in a feedback message, on a plurality of pieces of uplink data sent by a same terminal in different slots. Feedback information of uplink data transmission of the terminal device includes feedback information specific to the plurality of pieces of uplink data sent by the terminal device in the different slots. The feedback information corresponding to the uplink data sent by the terminal device in the different slots is at different locations in the feedback message.

In an embodiment, in one slot, if only one terminal device in the plurality of terminal devices (or the group of terminal devices) corresponding to the common DCI sends uplink data, the network device may either use UE-specific DCI (UE-specific DCI) or use the common DCI to feed back, to the terminal that sends the uplink data, a receiving status of uplink data transmission of the terminal device. In this embodiment, when the common DCI is used to feed back the receiving status of the uplink data transmission, in a feedback message, a field corresponding to feedback information corresponding to a terminal device that does not send data may be set to a default value (for example, be set to "0"). Using the UE-specific DCI to feed back the receiving status of the uplink data transmission is the prior art, and details are not described herein again.

The feedback message may be sent on a PDCCH (physical downlink control channel, physical downlink control channel, PDCCH for short) or an EPDCCH (enhanced physical downlink control channel, enhanced physical downlink control channel, EPDCCH for short).

S205. The terminal device determines, in the feedback message, the feedback information based on the feedback configuration information.

The terminal device determines, in the feedback message based on the configuration indicated by the feedback configuration information received in S201, the receiving status indicated by the feedback information, and determines, based on the receiving status indicated by the feedback information, whether to perform retransmission. When the feedback information indicates that the uplink data is successfully demodulated, the terminal device sends new uplink data. When the feedback information indicates that the uplink data fails to be demodulated or the uplink data is not received, the terminal device retransmits the uplink data.

The feedback configuration information includes a quantity of bits occupied by the feedback information in the feedback message, a feedback time interval, and a location index of the feedback information in the feedback message.

The quantity of bits represents a quantity of bits occupied by the feedback information in the feedback message. The feedback time interval represents a time interval between sending the uplink data and receiving the feedback information by the terminal device. The location index represents a location of the feedback information sent to the terminal device in the feedback message sent by the network device.

For example, referring to FIG. 2c, the feedback message sent by the network device includes 16 bits. The terminal device receives the feedback message sent by the network device, and learns, through parsing, that the feedback message sent by the network device is "100010100000000100", which are a zeroth bit to a 15^{th} respectively from left to right. The feedback configuration information includes the quantity of bits and the location index. The terminal device receives the feedback configuration information sent by the network device, and learns, through parsing, that the feedback configuration information sent by the network device is "ANIndex = 4, ANLength = 2". "ANIndex = 4" indicates that the feedback information is located at a fourth bit of the feedback message, and "ANLength = 2" indicates that the quantity of bits of the feedback information is 2. Therefore, it can be learned that the bits of the feedback information sent to the terminal device are "01". According to an example in S203, the terminal device determines that the feedback information indicates that the uplink data is received but the uplink data fails to be demodulated, and the terminal device resends the uplink data. "FreqResource = 2" is the uplink resource configuration information of the terminal device, and "FreqResource = 2" indicates that a second time-frequency resource block in each subframe is allocated to the uplink data.

For example, if a minimum granularity of the feedback time interval is one subframe, the feedback time interval is an integer multiple of a length of the subframe, and the feedback time interval is a length of one subframe, the terminal device sends the uplink data in a subframe n, and then the terminal device receives, in a subframe n+1, the feedback message sent by the network device.

In an embodiment, the feedback configuration information may be used to configure the feedback information of uplink data transmission performed by using each HARQ process of the terminal device. For example, one or more of a feedback time interval of the feedback information, a quantity of bits occupied by the feedback information in the feedback message, and a location index of the feedback information in the feedback message may be configured for the uplink data transmission performed by using each HARQ process of the terminal device.

In the method described in FIG. 2a, the terminal device learns, based on the feedback configuration information sent by the network device, a configuration of the feedback information. When needing to send the uplink data to the network device, the terminal device can directly obtain, based on the feedback configuration information, the feedback information from the feedback message sent by the network device specific to the uplink data, and determine, based on the feedback information, whether retransmission needs to be performed. In this way, the terminal device directly obtains the feedback information from a specified location in the feedback message sent by the network device, and does not need to obtain a location of the feedback information based on a global quantity of pilot sequences and global resource information that are allocated by the network device. Therefore, signaling overheads and a latency of data transmission are reduced.

FIG. 3 is another schematic flowchart of a data transmission method, the method includes the following steps.

S301. A network device sends higher layer signaling that carries feedback configuration information and uplink resource configuration information, and a terminal device receives the higher layer signaling sent by the network device.

The feedback configuration information is used to indicate a configuration of feedback information specific to uplink data of the terminal device, and the terminal device determines, based on the feedback configuration information, the feedback information sent to the terminal device in a feedback message sent by the network device. The feedback configuration information includes a quantity of bits, a feedback time interval, and a location index. The quantity of bits represents a quantity of bits of the feedback information in the feedback message. The feedback time interval represents a time interval between sending the uplink data by the terminal device and receiving, by the terminal device, the feedback configuration information sent by the network device. The location index represents a location of a bit of the feedback information in the feedback message.

The uplink resource configuration information indicates a configuration of a transmission resource allocated to the uplink data of the terminal device. The transmission resource includes but is not limited to one or more of a time-frequency resource, a reference signal, a spread spectrum sequence, a scrambling code, and a codebook.

S302. The terminal device determines the transmission resource of the uplink data based on the uplink resource configuration information.

S303. The terminal device sends the uplink data to the network device, and the network device receives the uplink data sent by the terminal device.

The terminal device sends the uplink data based on the transmission resource allocated by the network device.

S304. The network device receives the uplink data, and generates the feedback information.

The network device receives the uplink data, demodulates the uplink data to obtain a demodulation result, where the demodulation result includes two cases: successful demodulation and failed demodulation, and generates the feedback information according to the demodulation result.

It should be noted that the uplink data sent by the terminal device may be lost during an uplink transmission process, and in this case, the network device does not receive the uplink data.

For a specific implementation process of S304, refer to the description of S203 in FIG. 2a. Details are not described herein again.

S305. The network device sends, to the terminal device, DCI that carries the feedback information, and the terminal device receives the DCI sent by the network device.

The DCI is the feedback message sent by the network device, and the DCI includes feedback information of uplink data transmission of a plurality of terminal devices. The feedback information indicates a status of receiving, by the network device, the uplink data sent by the terminal device, and the feedback information may indicate three statuses: successful demodulation of the uplink data, failed demodulation of the uplink data, and a failure in receiving the uplink data.

S306. The terminal device determines, in the DCI, the feedback information based on the feedback configuration information.

The terminal device determines, in the DCI based on the feedback configuration information received in S301, the receiving status indicated by the feedback information, and determines, based on the receiving status, whether to retransmit the uplink data.

By implementing this embodiment of this application, the terminal device learns, based on the feedback configuration information sent by the network device, the configuration of feedback information. When needing to send the uplink data to the network device, the terminal device can directly obtain, based on the feedback configuration information, the feedback information from the DCI sent by the network device specific to the uplink data, and determine, based on the feedback information, whether retransmission needs to be performed. In this way, the terminal device directly obtains the feedback information from a spccificd location in the DCI of the network device, and does not need to obtain a location of the feedback information based on a global quantity of pilot sequences and global resource information that are allocated by the network device. Therefore, signaling overheads and a latency of data transmission are reduced.

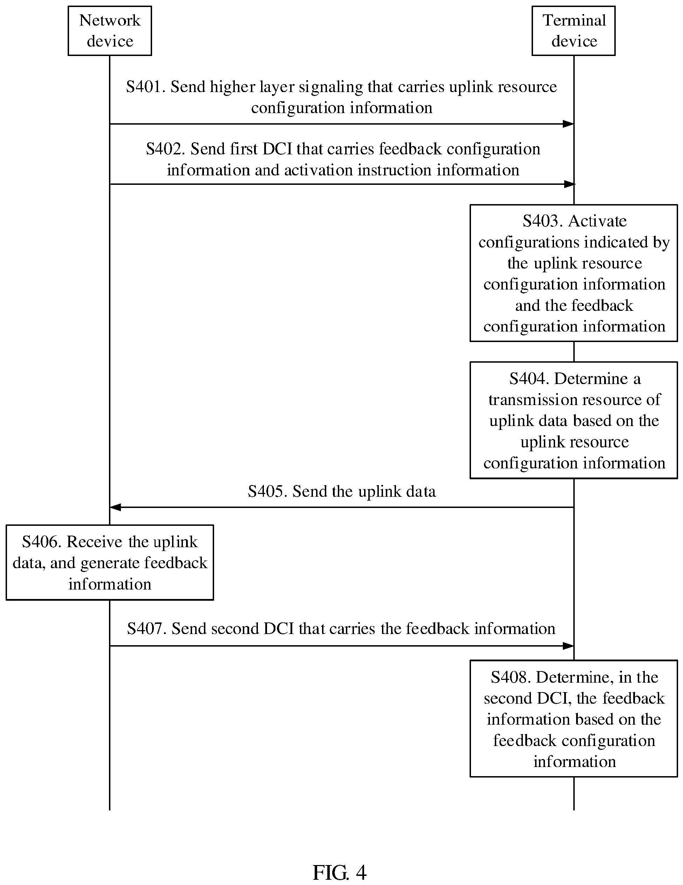

FIG. 4 is another schematic flowchart of a data transmission method according to an embodiment of the present invention. In this embodiment of the present invention, the method includes the following steps.

S401. A network device sends, to a terminal device, higher layer signaling that carries uplink resource configuration information, and the terminal device receives the higher layer signaling sent by the network device.

The uplink resource configuration information indicates a configuration of a transmission resource allocated to the terminal device. The transmission resource includes but is not limited to one or more of a time-frequency resource, a reference signal, a spread spectrum sequence, a scrambling code, and a codebook.

S402. The network device sends, to the terminal device, first DCI that carries feedback configuration information and activation instruction information, and the terminal device receives the first DCI sent by the network device.

The feedback configuration information is used to indicate a configuration of feedback information specific to uplink data of the terminal device, and the terminal device determines, based on the feedback configuration information, the feedback information sent to the terminal device in a feedback message sent by the network device. The feedback configuration information includes a quantity of bits, a feedback time interval, and a location index. The quantity of bits represents a quantity of bits of the feedback information in the feedback message. The feedback time interval represents a time interval between sending the uplink data by the terminal device and receiving, by the terminal device, the feedback configuration information sent by the network device. The location index represents a location of a bit of the feedback information in the feedback message.

The activation instruction information is at a specified location in the first DCI, and the activation instruction information may use one bit to indicate an activated state and a deactivated state. For example, a bit "1" indicates the activated state, and a bit "0" indicates the deactivated state. The activation instruction information is used to activate the configurations indicated by the uplink resource configuration information and the feedback configuration information.

S403. The terminal device activates the configuration indicated by the uplink resource configuration information and the configuration indicated by the feedback configuration information.

When determining that the bit of the activation instruction information in the first DCI indicates the activated state, the terminal device activates the configurations indicated by the uplink resource configuration information and the feedback configuration information. In this way, after activation, the terminal device can transmit the uplink data by using the transmission resource indicated by the uplink resource configuration information, and determines the feedback information of the uplink data based on the configuration indicated by the feedback configuration information. When the terminal device does not receive the activation instruction information in the first DCI, the configuration indicated by the uplink resource configuration information is in an inactive state. In this case, the terminal device does not use the configuration indicated by the uplink resource configuration information to transmit the uplink data.

S404. The terminal device determines the transmission resource of the uplink data based on the uplink resource configuration information.

S405. The terminal device sends the uplink data to the network device, and the network device receives the uplink data sent by the terminal device.

S406. The network device receives the uplink data, and generates the feedback information.

For a specific implementation process of S406, refer to the description of S203 in FIG. 2a. Details are not described herein again.

S407. The network device sends, to the terminal device, second DCI that carries the fccdback information.

S408. The terminal device determines, in the second DCI, the feedback information based on the feedback configuration information.

The second DCI is the feedback message sent by the network device, and the second DCI includes feedback information of uplink data transmission of a plurality of terminal devices. The terminal device determines, in the second DCI based on the feedback configuration information received in S402, a receiving status indicated by the feedback information, and determines, based on the receiving status, whether to retransmit the uplink data.

By implementing this embodiment of this application, the terminal device learns, based on the feedback configuration information sent by the network device, the configuration of feedback information. When needing to send the uplink data to the network device, the terminal device can directly obtain, based on the feedback configuration information, the feedback information from the DCI sent by the network device specific to the uplink data, and determine, based on the feedback information, whether retransmission needs to be performed. In this way, the terminal device directly obtains the feedback information from a specified location in the DCI of the network device, and does not need to obtain a location of the feedback information based on a global quantity of pilot sequences and global resource information that are allocated by the network device. Therefore, signaling overheads and a latency of data transmission are reduced.

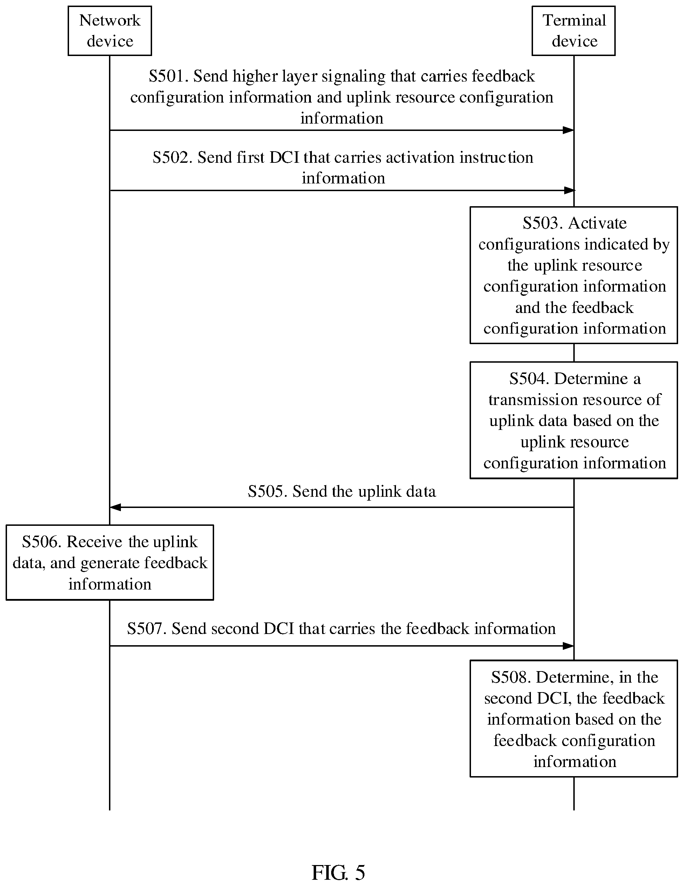

FIG. 5 is another schematic flowchart of a data transmission method according to an embodiment of the present invention. In this embodiment of the present invention, the method includes the following steps.

S501. A network device sends, to a terminal device, higher layer signaling that carries feedback configuration information and uplink resource configuration information, and the terminal device receives the higher layer signaling sent by the network device.

The feedback configuration information is used to indicate a configuration of feedback information specific to uplink data of the terminal device, and the terminal device determines, based on the feedback configuration information, the feedback information sent to the terminal device in a feedback message sent by the network device. The feedback configuration information includes a quantity of bits, a feedback time interval, and a location index. The quantity of bits represents a quantity of bits of the feedback information in the feedback message. The feedback time interval represents a time interval between sending the uplink data by the terminal and receiving, by the terminal device, the feedback configuration information sent by the network device. The location index represents a location of a bit of the feedback information in the feedback message. The uplink resource configuration information indicates a configuration of a transmission resource allocated to the terminal device. The transmission resource includes but is not limited to one or more of a time-frequency resource, a reference signal, a spread spectrum sequence, a scrambling code, and a codebook.

S502. The network device sends, to the terminal device, first DCI that carries activation instruction information, and the terminal device receives the first DCI sent by the network device.

The activation instruction information is at a specified location (for example, a reserved field) in the first DCI, and the activation instruction information may use one bit to indicate an activated state and a deactivated state. For example, a bit "1" indicates the activated state, and a bit "0" indicates the deactivated state. The activation instruction information is used to activate the configurations indicated by the uplink resource configuration information and the feedback configuration information.

S503. The terminal device activates configurations indicated by the uplink resource configuration information and the feedback configuration information.

When determining that the bit of the activation instruction information in the first DCI indicates the activated state, the terminal device activates the configurations indicated by the uplink resource configuration information and the feedback configuration information. In this way, after activation, the terminal device can transmit the uplink data by using the transmission resource indicated by the uplink resource configuration information, and determines the feedback information of the uplink data based on the feedback configuration information. When the terminal device does not receive the activation instruction information in the first DCI, the configuration indicated by the uplink resource configuration information and the configuration indicated by the feedback configuration information are both in an inactive state. In this case, the terminal device does not use the configuration indicated by the uplink resource configuration information to transmit the uplink data, and docs not interpret, based on the configuration indicated by the feedback configuration information, the feedback message sent by the network device to determine the feedback information.

S504. The terminal device determines, based on the uplink resource configuration information, the transmission resource used to transmit the uplink data.

S505. The terminal device sends the uplink data to the network device, and the network device receives the uplink data sent by the terminal device.

S506. The network device receives the uplink data, and generates the feedback information.

For a specific implementation process of S506, refer to the description of S203 in FIG. 2a. Details are not described herein again.

S507. The network device sends, to the terminal device, second DCI that carries the feedback information, and the terminal device receives the second DCI sent by the network device. The second DCI is the feedback message sent by the network device, and the second DCI includes feedback information specific to uplink data transmission of a plurality of terminal devices.

S508. The terminal device determines, in the second DCI, the feedback information based on the feedback configuration information.

The terminal device determines, in the second DCI based on the feedback configuration information received in S501, a receiving status indicated by the feedback information, and determines, based on the receiving status, whether to retransmit the uplink data.

By implementing this embodiment of this application, the terminal device learns, based on the feedback configuration information sent by the network device, the configuration of feedback information. When needing to send the uplink data to the network device, the terminal device can directly obtain, based on the feedback configuration information, the feedback information from the DCI sent by the network device specific to the uplink data, and determine, based on the feedback information, whether retransmission needs to be performed. In this way, the terminal device directly obtains the feedback information from a spccificd location in the DCI of the network device, and does not need to obtain a location of the feedback information based on a global quantity of pilot sequences and global resource information that are allocated by the network device. Therefore, signaling overheads and a latency of data transmission are reduced.

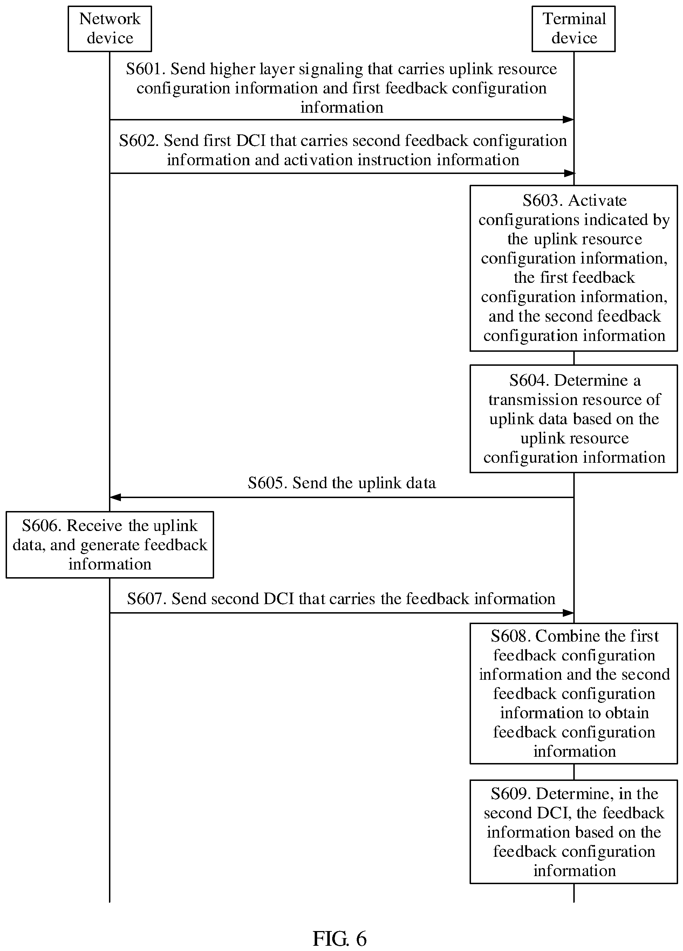

FIG. 6 is another schematic flowchart of a data transmission method according to an embodiment of the present invention. In this embodiment of the present invention, the method includes the following steps.

S601. A network device sends, to a terminal device, higher layer signaling that carries uplink resource configuration information and first feedback configuration information, and the terminal device receives the higher layer signaling sent by the network device.

The first feedback configuration information includes some parameters of feedback configuration information.

S602. The network device sends, to the terminal device, first DCI that carries second feedback configuration information and activation instruction information, and the terminal device receives the first DCI sent by the network device.

The second feedback configuration information includes some parameters of the feedback configuration information. The feedback configuration information includes a quantity of bits, a feedback time interval, and a location index. In an embodiment, the first feedback configuration information includes the quantity of bits, and the second feedback configuration information includes the feedback time interval and the location index. The first feedback configuration information and the second feedback configuration information are used to jointly indicate a configuration of feedback information specific to uplink data of the terminal device. In another embodiment, the first feedback configuration information may include the quantity of bits and the location index, and second feedback configuration information includes the feedback time interval. Alternatively, there may be a plurality of combinations of first feedback configuration information and the second feedback configuration information. This is not limited in this embodiment of the present invention.

S603. The terminal device activates the uplink resource configuration information, the first feedback configuration information, and the second feedback configuration information.

S604. The terminal device determines a transmission resource of the uplink data based on the uplink resource configuration information.

S605. The terminal device sends the uplink data to the network device, and the network device receives the uplink data sent by the terminal device.

S606. The network device receives the uplink data, and generates the feedback information.

For a specific implementation process of S606, refer to the description of S203 in FIG. 2a. Details are not described herein again.

S607. The network device sends, to the terminal device, second DCI that carries the feedback information.

S608. The terminal device combines the first feedback configuration information and the second feedback configuration information to obtain the feedback configuration information.

For example, according to an example in S602, the feedback configuration information obtained by the terminal device based on the first feedback configuration information and the second feedback configuration information includes three parameters: the quantity of bits, the feedback time interval, and the location index.

S609. The terminal device determines, in the second DCI, the feedback information based on the feedback configuration information.

The terminal device determines, in the second DCI based on the feedback configuration information received in S608, a receiving status indicated by the feedback information, and determines, based on the receiving status, whether to retransmit the uplink data.

By implementing this embodiment of this application, the terminal device learns, based on the feedback configuration information sent by the network device, the configuration of feedback information. When needing to send the uplink data to the network device, the terminal device can directly obtain, based on the feedback configuration information, the feedback information from the DCI sent by the network device specific to the uplink data, and determine, based on the feedback information, whether retransmission needs to be performed. In this way, the terminal device directly obtains the feedback information from a specified location in the DCI of the network device, and does not need to obtain a location of the feedback information based on a global quantity of pilot sequences and global resource information that are allocated by the network device. Therefore, signaling overheads and a latency of data transmission are reduced.

The methods in the embodiments of the present invention are described in detail above, and apparatuses in the embodiments of the present invention are provided below.

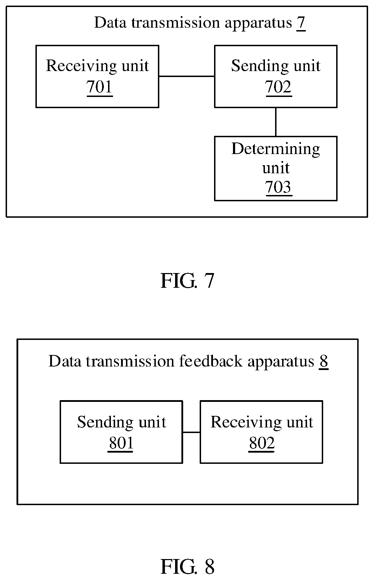

FIG. 7 is a schematic structural diagram of a data transmission apparatus according to an embodiment of the present invention, and the data transmission apparatus may be applied to a system shown in FIG. 1. The data transmission apparatus 7 may include a receiving unit 701, a sending unit 702, and a determining unit 703.

It should be noted that the data transmission apparatus 7 shown in FIG. 7 may implement a function of a terminal device side in the embodiments shown in FIG. 2a to FIG. 6. The receiving unit 701 is configured to receive feedback configuration information from a network device. The feedback configuration information is used to indicate a configuration of feedback information specific to uplink data of the terminal device. The sending unit 702 is configured to send the uplink data to the network device. The determining unit 703 is configured to determine, in a feedback message sent by the network device, the feedback information of the uplink data based on the feedback configuration information. The data transmission apparatus 7 may be a terminal device, or the data transmission apparatus 7 may be a field-programmable gate array (field-programmable gate array, FPGA), a dedicated integrated chip, a system on chip (system on chip, SoC), a central processing unit (central processor unit, CPU), a network processor (network processor, NP), a digital signal processing circuit, or a micro controller unit (micro controller unit, MCU) that is configured to implement a related function, or may be a programmable logic device (programmable logic device, PLD) or another integrated chip.

For specific implementation of each unit in the data transmission apparatus 7 and specific implementation of the feedback configuration information, refer to the method embodiments in FIG. 2a to FIG. 6. Details are not described herein again.

This embodiment of the present invention and the method embodiments in FIG. 2a to FIG. 6 are based on a same idea, and bring about same technical effects. For a specific process, refer to the descriptions of the method embodiments in FIG. 2a to FIG. 6. Details are not described herein again.

FIG. 8 is a schematic structural diagram of a data transmission feedback apparatus according to an embodiment of the present invention, and the data transmission feedback apparatus may be applied to a system shown in FIG. 1. The data transmission feedback apparatus 8 may be a network device in the system shown in FIG. 1, and may include a sending unit 801 and a receiving unit 802.

It should be noted that the data transmission feedback apparatus 8 shown in FIG. 8 may implement a function of a network device side in the embodiments shown in FIG. 2a to FIG. 6. The sending unit 801 is configured to send feedback configuration information to a terminal device. The feedback configuration information is used to indicate a configuration of feedback information specific to uplink data of the terminal device. The receiving unit 802 is configured to receive the uplink data from the terminal device. The sending unit 801 is further configured to send a feedback message based on the configuration of the feedback information specific to the uplink data of the terminal device. The feedback message carries the feedback information of the uplink data. The data transmission feedback apparatus 8 may be a network device, or the data transmission feedback apparatus 8 may be a field-programmable gate array (field-programmable gate array, FPGA), a dedicated integrated chip, a system on chip (system on chip, SoC), a central processing unit (central processor unit, CPU), a network processor (network processor, NP), a digital signal processing circuit, or a micro controller unit (micro controller unit, MCU) that is configured to implement a related function, or may be a programmable logic device (programmable logic device, PLD) or another integrated chip.

For specific implementation of each unit in the data transmission feedback apparatus 8 and specific implementation of the feedback configuration information, refer to the method embodiments in FIG. 2a to FIG. 6. Details are not described herein again.

This embodiment of the present invention and the method embodiments in FIG. 2a to FIG. 6 are based on a same idea, and bring about same technical effects. For a specific process, refer to the descriptions of the method embodiments in FIG. 2a to FIG. 6. Details are not described herein again.

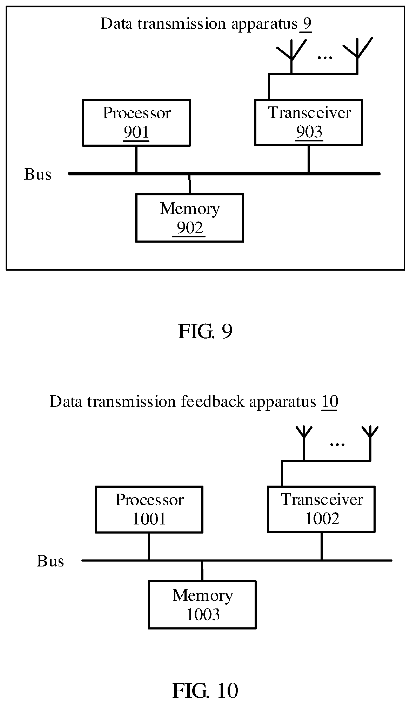

As shown in FIG. 9, an embodiment of the present invention further provides a data transmission apparatus 9.

When the data transmission apparatus 9 is a terminal device, the terminal device includes a processor 901, a memory 902, and a transceiver 903.

The memory 902 is configured to store a program and data. The memory may be a random access memory (English: Random Access Memory, RAM for short), a read only memory (English: Read Only Memory, ROM for short), or a flash memory. The memory 902 may be separately located in a communications device, or may be located in the processor 901.

The transceiver 903 may be used as a separate chip, may be a transceiver circuit in the processor 901, or may be used as an input/output interface. The transceiver 903 is configured to: receive feedback configuration information from a network device, where the feedback configuration information is used to indicate a configuration of feedback information specific to uplink data of the terminal device; send the uplink data to the network device; and receive a feedback message sent by the network device based on the feedback configuration information. For example, the transceiver 903 is configured to perform S201, S202, and S204 in FIG. 2a.

The processor 901 is configured to execute the program code stored in the memory 902, and when the program code is executed, the processor901 is configured to determine, in the feedback message sent by the network device, the feedback information of the uplink data based on the feedback configuration information. For example, the processor 901 is configured to perform the step S205 in FIG. 2a.

The transceiver 903, the memory 902, and the processor 901 are optionally connected by using a bus.

For specific implementation of each unit in the data transmission apparatus 9 and specific implementation of the feedback configuration information, refer to the method embodiments in FIG. 2a to FIG. 6. Details are not described herein again.

When the data transmission apparatus 9 is a chip, the chip may be a field programmable gate array, a dedicated integrated chip, a system on chip, a central processing unit, a network processor, a digital signal processing circuit, or a micro controller unit that is configured to implement a related function, or may be a programmable logic device or another integrated chip.

All or some of the foregoing embodiments may be implemented in a form of software, hardware, firmware, or any combination thereof. When a software program is used to implement the embodiments, the embodiments may be implemented completely or partially in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer readable storage medium or may be transmitted from a computer readable storage medium to another computer readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

This embodiment of the present invention and the method embodiments in FIG. 2a to FIG. 6 are based on a same idea, and bring about same technical effects. For a specific process, refer to the descriptions of the method embodiments in FIG. 2a to FIG. 6. Details are not described herein again.

As shown in FIG. 10, an embodiment of the present invention further provides a data transmission feedback apparatus 10.

When the data sending feedback apparatus 10 is a network device, the network device includes a processor 1001, a memory 1002, and a transceiver 1003.

The memory 1002 is configured to store a program and data. The memory may be a random access memory (English: Random Access Memory, RAM for short), a read only memory (English: Read Only Memory, ROM for short), or a flash memory, and the memory 1002 may be separately located in a communications device, or may be located in the processor 1001.

The transceiver 1003 may be used as a separate chip, may be a transceiver circuit in the processor 1001, or may be used as an input/output interface. The transceiver 1003 is configured to: send feedback configuration information to a terminal device, where the feedback configuration information is used to indicate a configuration of feedback information specific to uplink data of the terminal device; receive the uplink data from the terminal device; and send a feedback message based on the configuration of the feedback information specific to the uplink data of the terminal device, where the feedback message carries the feedback information of the uplink data. For example, the transceiver 1003 is configured to perform S201, S202, and S204 in FIG. 2a.

The processor 1001 is configured to execute the step indicated by the program code stored in the memory 1002.

The transceiver 1003, the memory 1002, and the processor 1001 are optionally connected by using a bus.

For specific implementation of each unit in the data transmission apparatus 10 and specific implementation of the feedback configuration information, refer to the method embodiments in FIG. 2a to FIG. 6. Details are not described herein again.

When the data transmission feedback apparatus 10 is a chip, the chip may be a field programmable gate array, a dedicated integrated chip, a system on chip, a central processing unit, a network processor, a digital signal processing circuit, or a micro controller unit that is configured to implement a related function, or may be a programmable logic device or another integrated chip.

All or some of the foregoing embodiments may be implemented in a form of software, hardware, firmware, or any combination thereof. When a software program is used to implement the embodiments, the embodiments may be implemented completely or partially in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer readable storage medium or may be transmitted from a computer readable storage medium to another computer readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

This embodiment of the present invention and the method embodiments in FIG. 2a to FIG. 6 are based on a same idea, and bring about same technical effects. For a specific process, refer to the descriptions of the method embodiments in FIG. 2a to FIG. 6. Details are not described herein again.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this invention as defined by the appended set of claims.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

All or some of the foregoing embodiments may be implemented in a form of software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of the present invention are all or partially generated. The computer may be a general-purpose computer, a dedicated computer, a computer network, or other programmable apparatuses. The computer instructions may be stored in a computer readable storage medium or may be transmitted by using the computer readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

A person of ordinary skill in the art may understand that all or some of the processes of the methods in the embodiments may be implemented by a computer program instructing related hardware. The program may be stored in a computer readable storage medium. When the program runs, the processes of the methods in the embodiments are performed. The foregoing storage medium includes: any medium that can store program code, such as a ROM or a random access memory RAM, a magnetic disk or an optical disc, and or the like.

## Claims

1. A data transmission method, comprising:
receiving (S401), by a terminal device, feedback configuration information from a network device, wherein the feedback configuration information is used to indicate a configuration of feedback information specific to uplink data of the terminal device;
sending (S405), by the terminal device, the uplink data to the network device; and
determining (S408), by the terminal device in a feedback message sent by the network device, the feedback information to the uplink data based on the feedback configuration information;
wherein the feedback configuration information comprises a feedback time interval of the feedback information, a quantity of bits occupied by the feedback information in the feedback message, and a location index of the feedback information in the feedback message, wherein the feedback time interval represents a time interval between sending the uplink data and receiving the feedback information by the terminal device, and the location index represents a start bit location of the feedback information of the terminal device in the feedback message;
wherein before the sending, by the terminal device, the uplink data to the network device, the method further comprises:
receiving (S402), by the terminal device, activation instruction information from the network device; and
activating (S403), by the terminal device according to the activation instruction information, the configuration indicated by the feedback configuration information;
wherein the feedback message is specifically common downlink control information, Common DCI, wherein the Common DCI is DCI specific to a plurality of terminal devices, and one piece of Common DCI includes information specific to the plurality of terminal devices.

2. The method according to claim 1, wherein the receiving, by a terminal device, feedback configuration information from a network device comprises:
receiving (S401), by the terminal device from the network device, higher layer signaling that carries the feedback configuration information.

3. The method according to claim 1, wherein the receiving, by a terminal device, feedback configuration information from a network device comprises:
receiving (S407), by the terminal device, downlink control information, DCI, that carries the feedback configuration information and that is sent by the network device.

4. The method according to claim 1, wherein the receiving, by a terminal device, feedback configuration information from a network device comprises:
receiving (S301), by the terminal device, higher layer signaling that carries first feedback configuration information; and
receiving (S305), by the terminal device, downlink control information DCI that carries second feedback configuration information, wherein
the first feedback configuration information and the second feedback configuration information jointly indicate the configuration of the feedback information specific to the uplink data of the terminal device.

5. A data transmission feedback method, comprising:
sending (S401), by a network device, feedback configuration information to a terminal device, wherein the feedback configuration information is used to indicate a configuration of feedback information specific to uplink data of the terminal device, wherein the feedback configuration information comprises a feedback time interval of the feedback information, a quantity of bits occupied by the feedback information in the feedback message, and a location index of the feedback information in the feedback message, wherein the feedback time interval represents a time interval between sending the uplink data and receiving the feedback information by the terminal device, and the location index represents a start bit location of the feedback information of the terminal device in the feedback message;
receiving (S406), by the network device, the uplink data from the terminal device; and
sending (S407), by the network device, a feedback message based on the configuration of the feedback information specific to the uplink data of the terminal device, wherein the feedback message carries the feedback information to the uplink data;
wherein before the receiving, by the network device, the uplink data from the terminal device, the method further comprises:
sending (S402), by the network device, activation instruction information to the terminal device, wherein the activation instruction information is used to instruct the terminal device to activate the configuration indicated by the feedback configuration information;
wherein the sending, by a network device, feedback configuration information to a terminal device comprises:
sending (S402), by the network device to the terminal device, downlink control information, DCI, that carries the feedback configuration information;
wherein the feedback message is specifically common downlink control information, Common DCI wherein the Common DCI is DCI specific to a plurality of terminal devices, and one piece of Common DCI includes information specific to the plurality of terminal devices.

6. The method according to claim 5, wherein the sending (S401), by a network device, feedback configuration information to a terminal device comprises:
sending (S301), by the network device to the terminal device, higher layer signaling that carries the feedback configuration information.

7. The method according to claim 5, wherein the sending (S401), by a network device, feedback configuration information to a terminal device comprises:
sending (S401), by the network device to the terminal device, higher layer signaling that carries first feedback configuration information; and
sending (S402), by the network device to the terminal device, downlink control information that carries second feedback configuration information, wherein
the first feedback configuration information and the second feedback configuration information jointly indicate the configuration of the feedback information specific to the uplink data of the terminal device.

8. A computer readable storage medium comprising instructions which, when executed by a computer, cause the computer to carry out the method according to any of claims 1 to 7.

9. A computer program product comprising instructions which, when the program is executed by a computer, cause the computer to carry out the method according to any one of claims 1 to 7.

10. An apparatus, comprising a processor and a transceiver, wherein the processor is coupled to the transceiver, and the processor is configured to execute a computer program or instruction, to control the transceiver to receive and send information; and when the processor executes the computer program or instruction, the processor is further configured to implement the method according to any one of claims 1 to 7.

## Patentansprüche

1. Datenübertragungsverfahren, umfassend:
Empfangen (S401) von Feedback-Konfigurationsinformationen von einer Netzwerkvorrichtung durch ein Endvorrichtung, wobei die Feedback-Konfigurationsinformationen verwendet werden, um eine Konfiguration von Feedback-Informationen anzuzeigen, die für Uplink-Daten der Endvorrichtung spezifisch sind;
Senden (S405) der Uplink-Daten durch die Endvorrichtung an die Netzwerkvorrichtung; und
Bestimmen (S408) der Feedback-Informationen zu den Uplink-Daten basierend auf den Feedback-Konfigurationsinformationen durch die Endvorrichtung in einer Feedback-Nachricht, die von der Netzwerkvorrichtung gesendet wird;
wobei die Feedback-Konfigurationsinformationen ein Feedback-Zeitintervall der Feedback-Informationen, eine Menge von Bits, die von den Feedback-Informationen in der Feedback-Nachricht belegt sind, und einen Positionsindex der Feedback-Informationen in der Feedback-Nachricht umfassen, wobei das Feedback-Zeitintervall ein Zeitintervall zwischen dem Senden der Uplink-Daten und dem Empfangen der Feedback-Informationen durch die Endvorrichtung repräsentiert, und der Positionsindex eine Startbit-Position der Feedback-Informationen der Endvorrichtung in der Feedback-Nachricht repräsentiert;
wobei das Verfahren vor dem Senden der Uplink-Daten an die Netzwerkvorrichtung durch die Endvorrichtung ferner Folgendes umfasst:
Empfangen (S402) von Informationen zur Aktivierungsanweisung von der Netzwerkvorrichtung durch die Endvorrichtung; und
Aktivieren (S403) der durch die Feedback-Konfigurationsinformationen angezeigten Konfiguration durch die Endvorrichtung gemäß den Informationen zur Aktivierungsanweisung;
wobei die Feedback-Nachricht spezifisch gemeinsame Downlink-Steuerinformationen, Common DCI, sind, wobei die Common DCI DCI-spezifisch für eine Vielzahl von Endvorrichtungen ist, und ein Teil von Common DCI Informationen enthält, die für die Vielzahl von Endvorrichtungen spezifisch sind.

2. Verfahren nach Anspruch 1, wobei das Empfangen von Feedback-Konfigurationsinformationen von einer Netzwerkvorrichtung durch eine Endvorrichtung Folgendes umfasst:
Empfangen (S401) einer höheren Ebenen-Signalisierung, die die Feedback-Konfigurationsinformationen trägt, durch die Endvorrichtung von der Netzwerkvorrichtung.

3. Verfahren nach Anspruch 1, wobei das Empfangen von Feedback-Konfigurationsinformationen von einer Netzwerkvorrichtung durch eine Endvorrichtung Folgendes umfasst:
Empfangen (S407) von Downlink-Steuerinformationen, DCI, durch die Endvorrichtung, die die Feedback-Konfigurationsinformationen tragen und die von der Netzwerkvorrichtung gesendet werden.

4. Verfahren nach Anspruch 1, wobei das Empfangen von Feedback-Konfigurationsinformationen von einer Netzwerkvorrichtung durch eine Endvorrichtung Folgendes umfasst:
Empfangen (S301) einer höheren Ebenen-Signalisierung durch die Endvorrichtung, die erste Feedback-Konfigurationsinformationen trägt; und
Empfangen (S305) von Downlink-Steuerinformationen DCI, die zweite Feedback-Konfigurationsinformationen tragen, durch die Endvorrichtung, wobei
die ersten Feedback-Konfigurationsinformationen und die zweiten Feedback-Konfigurationsinformationen zeigen zusammen die Konfiguration der Feedback-Informationen an, die für die Uplink-Daten der Endvorrichtung spezifisch sind.

5. Feedback-Datenübertragungsverfahren, umfassend:
Senden (S401) von Feedback-Konfigurationsinformationen durch eine Netzwerkvorrichtung an eine Endvorrichtung, wobei die Feedback-Konfigurationsinformationen verwendet werden, um eine Konfiguration von Feedback-Informationen anzuzeigen, die für Uplink-Daten der Endvorrichtung spezifisch sind, wobei die Feedback-Konfigurationsinformationen ein Feedback-Zeitintervall der Feedback-Informationen, eine Menge von Bits, die von den Feedback-Informationen in der Feedback-Nachricht belegt sind, und einen Positionsindex der Feedback-Informationen in der Feedback-Nachricht umfassen, wobei das Feedback-Zeitintervall ein Zeitintervall zwischen dem Senden der Uplink-Daten und dem Empfangen der Feedback-Informationen durch die Endvorrichtung, und der Positionsindex eine Startbit-Position der Feedback-Informationen der Endvorrichtung in der Feedback-Nachricht repräsentiert;
Empfangen (S406) von Uplink-Daten von der Netzwerkvorrichtung durch die Endvorrichtung; und
Senden (S407) einer Feedback-Nachricht durch die Netzwerkvorrichtung basierend auf der Konfiguration der Feedback-Informationen, die für die Uplink-Daten der Endvorrichtung spezifisch sind, wobei die Feedback-Nachricht die Feedback-Informationen zu den Uplink-Daten trägt;
wobei vor dem Empfangen der Uplink-Daten von der Endvorrichtung durch die Netzwerkvorrichtung ferner Folgendes umfasst:
Senden (S402) von Informationen zur Aktivierungsanweisung durch die Netzwerkvorrichtung an die Endvorrichtung, wobei die Informationen zur Aktivierungsanweisung verwendet werden, um die Endvorrichtung anzuweisen, die durch die Feedback-Konfigurationsinformationen angezeigte Konfiguration zu aktivieren;
wobei das Senden von Feedback-Konfigurationsinformationen durch eine Netzwerkvorrichtung an die Endvorrichtung Folgendes umfasst:
Senden (S402) von Downlink-Steuerinformationen, DCI, durch die Netzwerkvorrichtung an die Endvorrichtung, die die Feedback-Konfigurationsinformationen tragen;
wobei die Feedback-Nachricht spezifisch gemeinsame Downlink-Steuerinformationen, Common DCI, sind, wobei die Common DCI DCI-spezifisch für eine Vielzahl von Endvorrichtungen ist, und ein Teil von Common DCI Informationen enthält, die für die Vielzahl von Endvorrichtungen spezifisch sind.

6. Verfahren nach Anspruch 5, wobei das Senden (S401) von Feedback-Konfigurationsinformationen durch eine Netzwerkvorrichtung an eine Endvorrichtung Folgendes umfasst:
Senden (S301) einer höheren Ebenen-Signalisierung, die die Feedback-Konfigurationsinformationen trägt, durch die Netzwerkvorrichtung an die Endvorrichtung.

7. Verfahren nach Anspruch 5, wobei das Senden (S401) von Feedback-Konfigurationsinformationen durch eine Netzwerkvorrichtung an eine Endvorrichtung Folgendes umfasst:
Senden (S401) einer höheren Ebenen-Signalisierung, die die erste Feedback-Konfigurationsinformationen trägt, durch die Netzwerkvorrichtung an die Endvorrichtung; und
Senden (S402) von Downlink-Steuerinformationen, die die zweite Feedback-Konfigurationsinformationen tragen, durch die Netzwerkvorrichtung an die Endvorrichtung, wobei
die ersten Feedback-Konfigurationsinformationen und die zweiten Feedback-Konfigurationsinformationen zeigen zusammen die Konfiguration der Feedback-Informationen an, die für die Uplink-Daten der Endvorrichtung spezifisch sind.

8. Computerlesbares Speichermedium, das Anweisungen umfasst, die bei Ausführung durch einen Computer den Computer dazu veranlassen, das Verfahren nach einem der Ansprüche 1 bis 7 durchzuführen.

9. Computerprogrammprodukt, das Anweisungen umfasst, die, wenn das Programm von einem Computer ausgeführt wird, den Computer dazu veranlassen, das Verfahren nach einem der Ansprüche 1 bis 7 durchzuführen.

10. Apparat, umfassend einen Prozessor und einen Transceiver, wobei der Prozessor mit dem Transceiver gekoppelt ist und der Prozessor dazu konfiguriert ist, ein Computerprogramm oder eine Anweisung auszuführen, um den Transceiver zum Empfangen und Senden von Informationen zu steuern; und wenn der Prozessor das Computerprogramm oder die Anweisung ausführt, ist der Prozessor ferner dazu konfiguriert, das Verfahren nach einem der Ansprüche 1 bis 7 zu implementieren.

## Revendications

1. Procédé de transmission de données, comprenant :
la réception (S401), par un dispositif terminal, d'informations de configuration de retour d'un dispositif de réseau, dans lequel les informations de configuration de retour sont utilisées pour indiquer une configuration d'informations de retour spécifiques à des données de liaison montante du dispositif terminal ;
l'envoi (S405), par le dispositif terminal, des données de liaison montante au dispositif de réseau ; et
la détermination (S408), par le dispositif terminal dans un message de retour envoyé par le dispositif de réseau, des informations de retour aux données de liaison montante sur la base des informations de configuration de retour ;
dans lequel les informations de configuration de retour comprennent un intervalle de temps de retour des informations de retour, une quantité de bits occupés par les informations de retour dans le message de retour, et un index d'emplacement des informations de retour dans le message de retour, dans lequel l'intervalle de temps de retour représente un intervalle de temps entre l'envoi des données de liaison montante et la réception des informations de retour par le dispositif terminal, et l'index d'emplacement représente un emplacement de bit de départ des informations de retour du dispositif terminal dans le message de retour ;
dans lequel avant l'envoi, par le dispositif terminal, des données de liaison montante au dispositif de réseau, le procédé comprend en outre :
la réception (S402), par le dispositif terminal, d'informations d'instruction d'activation du dispositif de réseau ; et
l'activation (S403), par le dispositif terminal selon les informations d'instruction d'activation, de la configuration indiquée par les informations de configuration de retour ;
dans lequel le message de retour est spécifiquement des informations de commande de liaison descendante communes, DCI communes, dans lequel les DCI communes sont des DCI spécifiques à une pluralité de dispositifs terminaux, et un élément de DCI communes comporte des informations spécifiques à la pluralité de dispositifs terminaux.

2. Procédé selon la revendication 1, dans lequel la réception, par un dispositif terminal, d'informations de configuration de retour d'un dispositif de réseau, comprend :
la réception (S401), par le dispositif terminal à partir du dispositif de réseau, d'une signalisation de couche supérieure qui transporte les informations de configuration de retour.

3. Procédé selon la revendication 1, dans lequel la réception, par le dispositif terminal, d'informations de configuration de retour d'un dispositif de réseau, comprend :
la réception (S407), par le dispositif terminal, d'informations de commande de liaison descendante, DCI, qui transportent les informations de configuration de retour et qui sont envoyées par le dispositif de réseau.

4. Procédé selon la revendication 1, dans lequel la réception, par un dispositif terminal, d'informations de configuration de retour d'un dispositif de réseau comprend :
la réception (S301), par le dispositif terminal, d'une signalisation de couche supérieure qui transporte des premières informations de configuration de retour ; et
la réception (S305), par le dispositif terminal, d'informations de commande de liaison descendante DCI qui transportent des secondes informations de configuration de retour, dans lequel
les premières informations de configuration de retour et les secondes informations de configuration de retour indiquent conjointement la configuration des informations de retour spécifiques aux données de liaison montante du dispositif terminal.

5. Procédé de retour de transmission de données, comprenant :
l'envoi (S401), par un dispositif de réseau, d'informations de configuration de retour à un dispositif terminal, dans lequel les informations de configuration de retour sont utilisées pour indiquer une configuration d'informations de retour spécifiques à des données de liaison montante du dispositif terminal, dans lequel les informations de configuration de retour comprennent un intervalle de temps de retour des informations de retour, une quantité de bits occupés par les informations de retour dans le message de retour, et un index d'emplacement des informations de retour dans le message de retour, dans lequel l'intervalle de temps de retour représente un intervalle de temps entre l'envoi des données de liaison montante et la réception des informations de retour par le dispositif terminal, et l'index d'emplacement représente un emplacement de bit de départ des informations de retour du dispositif terminal dans le message de retour ;
la réception (S406), par le dispositif de réseau, des données de liaison montante à partir du dispositif terminal ; et
l'envoi (S407), par le dispositif de réseau, d'un message de retour sur la base de la configuration des informations de retour spécifiques aux données de liaison montante du dispositif terminal, dans lequel le message de retour transporte les informations de retour vers les données de liaison montante ;
dans lequel avant la réception, par le dispositif de réseau, des données de liaison montante à partir du dispositif terminal, le procédé comprend en outre :
l'envoi (S402), par le dispositif de réseau, d'informations d'instruction d'activation au dispositif terminal, dans lequel les informations d'instruction d'activation sont utilisées pour ordonner au dispositif terminal d'activer la configuration indiquée par les informations de configuration de retour ;
dans lequel l'envoi, par un dispositif de réseau, d'informations de configuration de retour à un dispositif terminal comprend :
l'envoi (S402), par le dispositif de réseau au dispositif terminal, d'informations de commande de liaison descendante, DCI, qui transportent les informations de configuration de retour ;
dans lequel le message de retour est spécifiquement des informations de commande de liaison descendante communes, DCI communes, dans lequel les DCI communes sont des DCI spécifiques à une pluralité de dispositifs terminaux, et un élément de DCI communes comporte des informations spécifiques à la pluralité de dispositifs terminaux.

6. Procédé selon la revendication 5, dans lequel l'envoi (S401), par un dispositif de réseau, d'informations de configuration de retour à un dispositif terminal, comprend :
l'envoi (S301), par le dispositif de réseau à un dispositif terminal, d'une signalisation de couche supérieure qui transporte les informations de configuration de retour.

7. Procédé selon la revendication 5, dans lequel l'envoi (S401), par un dispositif de réseau, d'informations de configuration de retour à un dispositif terminal, comprend :
l'envoi (S401), par le dispositif de réseau au dispositif terminal, d'une signalisation de couche supérieure qui transporte des premières informations de configuration de retour ; et
l'envoi (S402), par le dispositif de réseau au dispositif terminal, d'informations de commande de liaison descendante qui transportent des secondes informations de configuration de retour, dans lequel
les premières informations de configuration de retour et les secondes informations de configuration de retour indiquent conjointement la configuration des informations de retour spécifiques aux données de liaison montante du dispositif terminal.

8. Support de stockage lisible par ordinateur comprenant des instructions qui, lorsqu'elles sont exécutées par un ordinateur, amènent l'ordinateur à exécuter le procédé selon l'une quelconque des revendications 1 à 7.

9. Produit de programme informatique comprenant des instructions qui, lorsque le programme est exécuté par un ordinateur, amènent l'ordinateur à exécuter le procédé selon l'une quelconque des revendications 1 à 7.

10. Appareil, comprenant un processeur et un émetteur-récepteur, dans lequel le processeur est couplé à l'émetteur-récepteur, et le processeur est configuré pour exécuter un programme ou une instruction informatique, pour commander l'émetteur-récepteur afin de recevoir et d'envoyer des informations ; et lorsque le processeur exécute le programme ou l'instruction informatique, le processeur est en outre configuré pour mettre en œuvre le procédé selon l'une quelconque des revendications 1 à 7.
